# FASCICULE DE BREVET EUROPEEN

(11) **EP 3 203 122 B1**
(45) Date de publication et mention de la délivrance du brevet: **28.03.2018**
(21) Numéro de dépôt: 17305081.6
(22) Date de dépôt: 25.01.2017
(51) Int. Cl.: G01D 11/24, F16J 15/42

(54) **DISPOSITIF DE DÉTECTION ANGULAIRE AVEC UNE PROTECTION CONTRE LES CONTAMINANTS EXTÉRIEURS**
VORRICHTUNG ZUR WINKELERFASSUNG MIT EINEM SCHUTZ GEGEN VERUNREINIGUNGEN VON AUSSEN
ANGULAR DETECTION DEVICE WITH PROTECTION AGAINST EXTERNAL CONTAMINANTS

(30) Priorité: 25.01.2016 FR 1650549
(43) Date de publication de la demande: 09.08.2017
(73) Titulaire: Carl Freudenberg KG, 69469 Weinheim (DE)
(72) Inventeur: MARCHAL, Jean-Philippe, 52600 CHALINDREY (FR); LUTAUD, Dominique, 52160 AUBERIVE (FR); LUTAUD, Charlie, 52360 ORBIGNY AU MONT (FR); THURIAULT, Pierre, 52200 LANGRES (FR)
(74) Mandataire: Nuss, Laurent

(56) Documents cités:
- EP-A1- 2 093 574
- GB-A- 1 212 715
- US-A1- 2006 091 612
- US-A1- 2014 374 993

## Description

La présente invention concerne le domaine des équipements pour installations, machines, véhicules ou analogues comprenant une pièce rotative ou tournante, tel qu'un arbre ou un axe, qu'il y a lieu d'étanchéifier et de repérer en rotation et/ou en position angulaire.

La présente invention a pour objet un dispositif de détection angulaire pour une telle pièce, avec une protection intégrée contre les contaminants extérieurs, préférentiellement sous la forme d'un joint dynamique, ainsi qu'un carter et un palier comprenant une telle pièce et un tel dispositif associé.

Dans le contexte des pièces tournantes rotatives, comme par exemple un arbre sortant d'un carter moteur ou d'un arbre porté et guidé dans un palier, l'étanchéité entre le milieu intérieur, dans lequel réside généralement un fluide lubrifiant, et le milieu extérieur est réalisé couramment par un joint statique circulaire dont au moins une lèvre souple est en appui glissant sur l'arbre. De tels joints sont par exemple connus par les documents FR 2 986 598, EP 2 895 773, EP 2 739 885 et FR 3 018 575.

Néanmoins, pour aboutir à une protection satisfaisante, ces dispositifs de joints connus doivent être associés à des éléments d'étanchéité ou des moyens de protection complémentaires en vue de protéger le passage d'arbre et le joint d'étanchéité en place (étanchéité pour les fluides intérieurs) contre les contaminants extérieurs (eau, boue, poussières, ...)

A titre d'exemples, on peut citer les lèvres pare-poussières (sans contact, mais présence d'un interstice laissant passer les contaminants près de la surface de l'arbre), les joints à lèvres labyrinthe, généralement en fibres non-tissées (en contact avec l'arbre tournant, donc pertes par frottements).

On connait également des moyens formant ventilateur ou soufflante, sous la forme d'ailettes montées sur l'arbre rotatif, pour repousser les contaminants en créant un flux d'air de refoulement (voir par exemple GB 2123498, CN 202469005).

Dans les différents cas précités, il s'agit de structures supplémentaires spécifiques, entraînant un coût, un encombrement, un poids et une complexité constructive additionnels.

D'autre part, on connaît des dispositifs de détection de position angulaire destinés à repérer la position et/ou le mouvement en rotation d'un arbre, axe ou pièce rotative analogue.

Par leur structure et leur présence (voir par exemple US 6 305 353), ces dispositifs de détection, qui comprennent généralement un corps annulaire monté sur l'arbre et une structure ou un logement circulaire circonférentiel portant le(s) capteur(s), forment eux-mêmes un écran de protection contre les contaminants lorsqu'ils sont disposés dans l'ouverture ou à proximité immédiate du joint d'étanchéité déjà présent. Cette fonction de protection peut être renforcée par la mise en place d'un moyen d'étanchéité périphérique entre les deux corps en mouvement rotatif l'un par rapport à l'autre. Toutefois cette solution n'est pas satisfaisante et entraîne des pertes non négligeables liées aux frottements.

La présente invention a pour but de proposer une solution d'étanchéité supplémentaire en relation avec un dispositif de détection angulaire, sans mise en oeuvre d'un moyen additionnel.

Par le document US 2014/0374993, on connaît un dispositif de détection angulaire selon le préambule de la revendication 1, avec notamment des formations destinées à générer un flux d'air.

Toutefois, dans cette construction connue, la totalité des formations générant un flux d'air est présente sur le rotor, ce qui en particulier rend sa construction complexe.

Le but de l'invention consiste notamment à proposer une solution permettant de surmonter au moins certains des inconvénients exposés précédemment, et plus particulièrement apte à surmonter la limitation précitée.

Ce but est atteint par les caractéristiques de la partie caractérisante de la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation frontale dans la direction axiale de la pièce rotative (arbre), d'un dispositif de détection angulaire selon l'invention ;
la figure 2 est une coupe selon A-A, vue partiellement en perspective, du dispositif représenté figure 1, l'arbre étant enlevé ;
la figure 3A est une vue en perspective du dispositif représenté figure 1, en accord avec un premier mode de réalisation du second corps fixe, les deux corps constitutifs étant séparés ;
les figures 3B et 3C sont des vues partielles en perspective de deux portions différentes du second corps fixe représenté figure 3A ;
les figures 4A, 4B et 4C sont des vues partielles en perspective de trois variantes d'un premier mode de réalisation du premier corps mobile annulaire faisant partie du dispositif représenté figures 1 et 3A ;
les figures 5A et 5B sont des vues respectivement en perspective et en coupe (élévation) d'un premier corps annulaire mobile, selon un second mode de réalisation de l'invention, et,
la figure 6 est une vue en coupe et en perspective d'un second corps fixe selon un second mode de réalisation de l'invention.

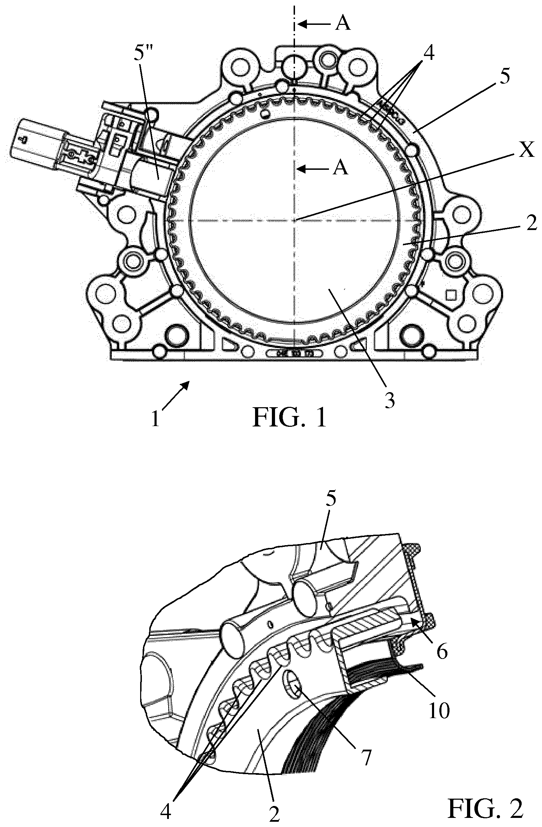

Les figures 1, 2 et 3A montrent un dispositif 1 de détection angulaire comprenant, d'une part, un premier corps mobile 2 de forme générale annulaire, monté rigidement sur une pièce rotative, par exemple du type arbre, axe ou analogue (non spécifiquement représentée), avec une direction axiale X, et comportant des dents et/ou des éléments détectables similaires 4 répartie(s) selon un arrangement ordonné sur la circonférence dudit corps annulaire 2 et, d'autre part, un second corps fixe 5 définissant une structure à ouverture circulaire 5' autour et/ou en regard du premier corps annulaire mobile 2. Ce second corps 5 porte un ou des capteur(s) 5" apte (s), d'une part, à détecter individuellement les dents et/ou les éléments similaires 4 du premier corps mobile 2 lors de leur positionnement ou passage au niveau d'un emplacement déterminé et, d'autre part, à générer un signal informatif correspondant. Lesdits premier et second corps 2 et 5 délimitent entre eux un passage en forme de fente ou d'interstice circonférentiel(le) 6, éventuellement avec une constitution labyrinthique ou à chicane(s).

Conformément à l'invention, le premier corps mobile et/ou le second corps fixe 5 comporte(nt) une ou plusieurs formation(s) 7, 7', éventuellement mutuellement coopérantes, en creux et/ou en saillie, apte(s) et destinée(s) à générer un flux d'air FA créant un joint dynamique circonférentiel au niveau du passage ou de l'interstice 6 lors de la rotation de la pièce rotative 3, ce par coopération entre les deux corps 2 et 5.

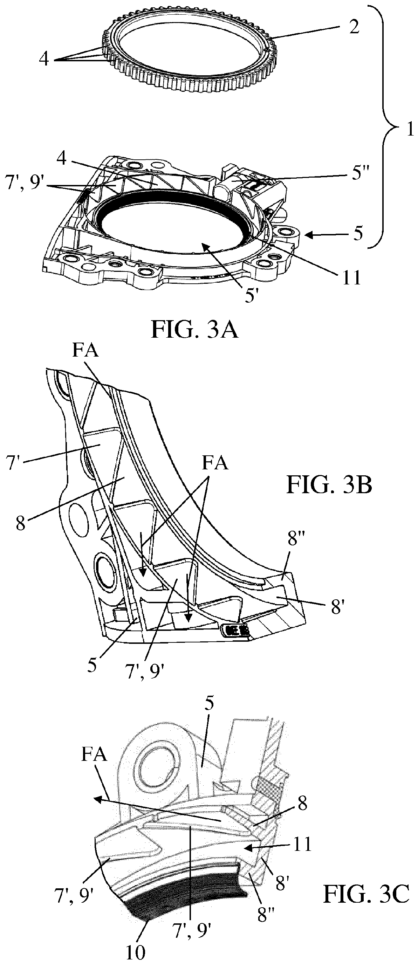

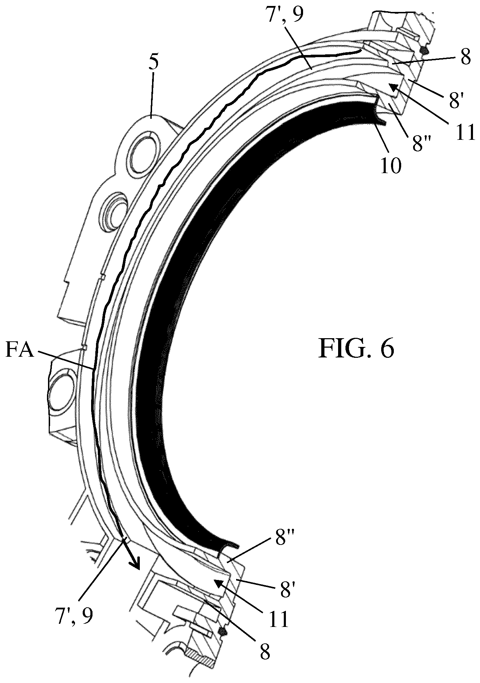

Selon l'invention, et comme cela ressort à titre d'exemple des figures 3 et 6, le second corps fixe 5 présente au niveau d'une paroi circulaire à extension axiale 8, entourant le premier corps mobile annulaire 2, une ou des formation(s) 7' en relief ou en creux à configuration hélicoïdale, comprenant soit une unique spire 9 s'étendant sur tout le pourtour intérieur de ladite paroi circulaire 8, soit une pluralité de portions de spires successives 9' réparties sur le pourtour intérieur de ladite paroi 8.

Ainsi l'invention propose un dispositif 1 intégrant des moyens pour créer un joint dynamique entre les deux corps 2 et 5, ce sans établissement d'un quelconque contact, sans nécessiter de moyens additionnels séparés, sans modification constructive notable et sans influencer la fonction de détection angulaire.

Le flux d'air FA, généré avantageusement à l'intérieur du passage 6, est éjecté du côté du dispositif 1 opposé à la face tournée vers la portion d'arbre ou d'axe 3 à étanchéifier.

Cette éjection se fait radialement vers l'extérieur avec un angle plus ou moins incliné (entre 0° et 90°) par rapport à la direction axiale X, en fonction de la conformation des pièces 2 et 5 et du passage 6.

Préférentiellement, et comme le montrent les figures 2, 3B, 3C et 6, le second corps fixe 5 forme déflecteur directionnel, concentrateur et/ou amplificateur pour le flux d'air généré par la rotation du premier corps mobile 2 annulaire pourvu de formations 7 fournissant des surfaces d'entraînement d'air, telles que des pales, des ailettes, des aubes ou analogues. Ainsi, des formations additionnelles spécifiques 7 du premier corps 2 génèrent le flux d'air FA et la configuration du volume entre les deux corps 2 et 5 contribue à sa conformation et à son guidage. Ledit volume interstitiel constitue de ce fait une zone d'obstruction dynamique à tout passage de poussière ou d'agent polluant dans le sens opposé à celui dudit flux d'air FA.

En accord avec une construction avantageuse de l'invention, permettant notamment d'aboutir à un passage 6 à chicanes entre les deux corps 2 et 5, le second corps fixe 5 comporte au moins une première paroi 8 à extension axiale entourant le premier corps mobile annulaire 2 et au moins une seconde paroi 8' s'étendant radialement vers l'intérieur à partir de la première paroi entourante extérieure 8, ce au moins partiellement en regard dudit premier corps mobile annulaire 2.

Chacune de ces solutions constructives permet de générer des joints dynamiques gazeux avec chacun des caractéristiques spécifiques, en particulier des actions de refoulement par création d'un vortex, d'un tourbillon autour de l'arbre 2.

Avantageusement, le second corps fixe 5 comporte au moins un joint matériel d'étanchéité 10 destiné à coopérer avec le premier corps mobile annulaire 2 pour étanchéifier le passage en forme de fente ou d'interstice circonférentiel(le) 6 entre les deux corps 2 et 5, préférentiellement son extrémité opposée à son ouverture d'éjection du flux gazeux FA.

Dans la pratique, le joint d'étanchéité 10 peut être très avantageusement monté sur le contour intérieur de la seconde paroi à extension radiale 8' en forme de plaque annulaire, éventuellement au niveau du bord libre d'une aile axiale 8" prolongeant ladite seconde paroi 8'.

Dans ce dernier cas, ressortant de la figure 3C par exemple, les parois 8 et 8' et l'aile 8" forment ensemble, en coupe, une section en C.

Lorsque le premier corps mobile annulaire 2 présente également en coupe une section en C, les deux corps 2 et 5 peuvent être montés de manière mutuellement imbriquée (l'aile supérieure d'un C s'étendant entre les deux ailes de l'autre C), constituant ainsi un passage 6 à plusieurs chicanes.

Selon une autre caractéristique de l'invention, ressortant des figures 3C et 6 notamment, le second corps fixe 5, à ouverture circulaire 5' coopérante avec le premier corps mobile annulaire 2, définit une rainure annulaire circonférentielle 11 apte à canaliser le flux d'air FA généré par la rotation dudit premier corps mobile annulaire 2.

La ou les formation(s) 7' peut(vent) être formée(s) dans la paroi latérale extérieure de cette rainure 11, dans laquelle peut circuler la partie du corps mobile annulaire 2 pourvue de dents 4 (section en C).

Comme indiqué précédemment, il est préféré que les corps 2 et 5 présentent chacun des formations 7 et 7' respectives, coopérantes fonctionnellement entre elles pour créer le joint dynamique à flux d'air lors de la rotation de la pièce 3.

Conformément à un autre aspect de l'invention, et en relation avec un premier mode de réalisation non représenté, il peut être prévu que les formations 7 présentes sur le premier corps mobile annulaire 2 consistent en des dents 4 conformées aérodynamiquement pour générer, lors de la rotation dudit premier corps 2, et par coopération avec des formations 7' présentes sur le second corps fixe 5, le flux d'air contrôlé FA formant joint dynamique.

Ces dents 4 peuvent avantageusement être identiques avec les dents dont la détection par le(s) capteur(s) 5" permet de déterminer la position et/ou le déplacement angulaire du rotor 2.

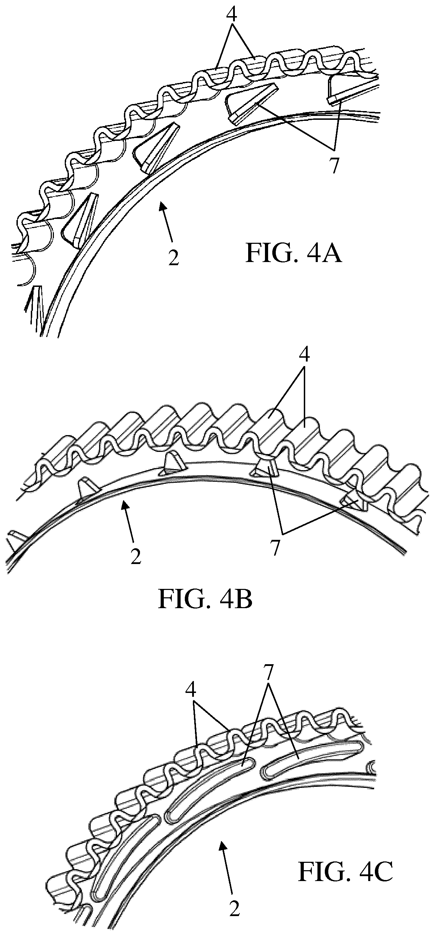

En accord avec un autre mode de réalisation, représenté à titre d'exemple aux figures 4A à 4C, le premier corps annulaire mobile 2 est réalisé en tôle avec au moins une paroi à extension radiale, avantageusement en forme de plaque annulaire 8' et au moins une paroi à extension axiale 8, les formations 7 aptes à générer un flux d'air, réparties sur sa circonférence, consistant en des pales, aubes ou ailettes rapportées sur ou formées par crevées dans l'une au moins desdites parois 8, 8', de manière non interférentes avec les dents ou éléments détectables analogues 4.

Lorsque les formations 7 sont rapportées, elles peuvent être réalisées par surmoulage ou solidarisation de pièces.

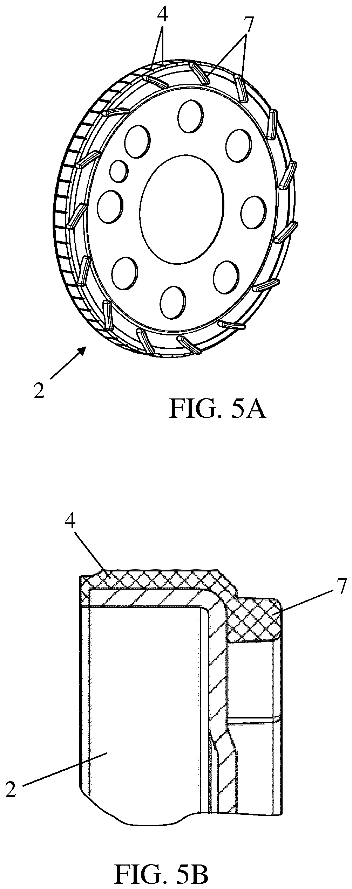

En accord avec encore un autre mode de réalisation, représenté à titre d'exemple sur les figures 5A et 5B, le premier corps annulaire mobile 2 comporte une armature avec au moins une paroi à extension radiale 8', avantageusement en forme de plaque annulaire, sur laquelle les formations 7 aptes à générer un flux d'air, réparties sur sa circonférence, et consistant en des pales, des aubes ou des ailettes, sont constituées de structures en relief obtenues par surmoulage d'un matériau synthétique, éventuellement simultanément avec les dents ou les éléments détectables similaires 4.

Bien entendu, les différents types de formations 7, 7' décrits précédemment peuvent être combinés entre eux.

L'invention concerne également un carter étanche (non représenté) dont la paroi est traversée par un arbre rotatif, un joint d'étanchéité ou un arrangement de joints d'étanchéité étant montés au niveau du passage dans la paroi.

Ce carter est caractérisé en ce qu'un dispositif 1 tel que décrit précédemment est installé à proximité de l'ouverture extérieure dudit passage de manière à fournir, en plus de la fonction de détection de position angulaire de l'arbre 3, également une fonction de protection dynamique contre les contaminants extérieurs pour le passage.

Enfin, l'invention porte aussi sur un palier pour arbre rotatif (non représenté), comportant un joint d'étanchéité ou un arrangement de joints d'étanchéité et auquel est associé un dispositif de détection angulaire de la position et/ou du mouvement angulaire de l'arbre rotatif, dispositif de palier caractérisé en ce que le dispositif de détection angulaire est un dispositif 1 tel que mentionné et décrit ci-dessus.

Bien entendu, l'invention n'est pas limitée aux modes de réalisations décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de détection angulaire comprenant, d'une part, un premier corps mobile (2) de forme générale annulaire, monté rigidement sur une pièce rotative (3), par exemple du type arbre, axe ou analogue, avec une direction axiale, et comportant des dents et/ou des éléments détectables similaires (4) répartie(s) selon un arrangement ordonné sur la circonférence dudit corps annulaire (2) et, d'autre part, un second corps fixe (5) définissant une structure à ouverture circulaire (5') autour et/ou en regard du premier corps annulaire mobile (2), lesdits premier et second corps (2 et 5) délimitant entre eux un passage en forme de fente ou d'interstice circonférentiel(le) (6), éventuellement avec une constitution labyrinthique ou à chicane(s), le premier corps mobile (2) comportant une ou plusieurs formation(s) (7), en creux et/ou en saillie, apte(s) et destinée(s) à générer un flux d'air (FA),
dispositif (1) **caractérisé**
**en ce que** le second corps (5) porte avantageusement un ou des capteur(s) (5") apte(s) à détecter individuellement les dents et/ou les éléments similaires (4) du premier corps mobile (2) lors de leur positionnement ou passage au niveau d'un emplacement déterminé et à générer un signal informatif correspondant, et
**en ce que** le second corps fixe (5) présente au niveau d'une paroi circulaire à extension axiale (8), entourant le premier corps mobile annulaire (2), une ou des formation(s) (7') en relief ou en creux à configuration hélicoïdale, comprenant soit une unique spire (9) s'étendant sur tout le pourtour intérieur de ladite paroi circulaire (8), soit une pluralité de portions de spires successives (9') réparties sur le pourtour intérieur de ladite paroi (8), la ou les formation(s) (7, 7') respectivement du premier corps mobile (2) et du second corps fixe (5) coopérant mutuellement durant la rotation de la pièce rotative (3) de manière à générer un flux d'air (FA)) créant un joint dynamique circonférentiel au niveau du passage ou de l'interstice (6).

2. Dispositif selon la revendication 1, **caractérisé en ce que** le second corps fixe (5) forme déflecteur directionnel, concentrateur et/ou amplificateur pour le flux d'air généré par la rotation du premier corps mobile (2) annulaire pourvu de formations (7) fournissant des surfaces d'entraînement d'air, telles que des pales, des ailettes, des aubes ou analogues.

3. Dispositif selon la revendication 1 ou 2, **caractérisé en ce que** le second corps fixe (5) comporte au moins une première paroi (8) à extension axiale entourant le premier corps mobile annulaire (2) et au moins une seconde paroi (8') s'étendant radialement vers l'intérieur à partir de la première paroi entourante extérieure (8), ce au moins partiellement en regard dudit premier corps mobile annulaire (2).

4. Dispositif selon l'une quelconque des revendications 1 à 3, **caractérisé en ce que** le second corps fixe (5) comporte au moins un joint d'étanchéité (10) destiné à coopérer avec le premier corps mobile annulaire (2) pour étanchéifier le passage en forme de fente ou d'interstice circonférentiel(le) (6) entre les deux corps (2 et 5).

5. Dispositif selon les revendications 3 et 4, **caractérisé en ce que** le joint d'étanchéité (10) est monté sur le contour intérieur de la seconde paroi à extension radiale (8') en forme de plaque annulaire, éventuellement au niveau du bord libre d'une aile axiale (8") prolongeant ladite seconde paroi (8').

6. Dispositif selon l'une quelconque des revendications 1 à 5, **caractérisé en ce que** le second corps fixe (5), à ouverture circulaire (5') coopérante avec le premier corps mobile annulaire (2), définit une rainure annulaire circonférentielle (11) apte à canaliser le flux d'air (FA) généré par la rotation dudit premier corps mobile annulaire (2).

7. Dispositif selon l'une quelconque des revendications 1 à 6, **caractérisé en ce que** les formations (7) présentes sur le premier corps mobile annulaire (2) consistent en des dents (4) conformées aérodynamiquement pour générer, lors de la rotation dudit premier corps (2) et par coopération avec des formations (7') présentes sur le second corps fixe (5), le flux d'air contrôlé (FA) formant joint dynamique.

8. Dispositif selon l'une quelconque des revendications 1 à 6, **caractérisé en ce que** le premier corps annulaire mobile (2) est réalisé en tôle avec au moins une paroi à extension radiale, avantageusement en forme de plaque annulaire (8') et au moins une paroi à extension axiale (8), les formations (7) aptes à générer un flux d'air, réparties sur sa circonférence, consistant en des pales, aubes ou ailettes rapportées sur ou formées par crevées dans l'une au moins desdites parois (8, 8'), de manière non interférentes avec les dents ou éléments détectables analogues (4).

9. Dispositif selon l'une quelconque des revendications 1 à 6, **caractérisé en ce que** le premier corps annulaire mobile (2) comporte une armature avec au moins une paroi à extension radiale (8'), avantageusement en forme de plaque annulaire, sur laquelle les formations (7) aptes à générer un flux d'air, réparties sur sa circonférence, et consistant en des pales, des aubes ou des ailettes, sont constituées de structures en relief obtenues par surmoulage d'un matériau synthétique, éventuellement simultanément avec les dents ou les éléments détectables similaires (4).

10. Carter étanche dont la paroi est traversée par un arbre rotatif, un joint d'étanchéité ou un arrangement de joints d'étanchéité étant montés au niveau du passage dans la paroi,
carter **caractérisé en ce qu'**un dispositif (1) selon l'une quelconque des revendications 1 à 9 est installé à proximité de l'ouverture extérieure dudit passage de manière à fournir, en plus de la fonction de détection de position angulaire de l'arbre (3), également une fonction de protection dynamique contre les contaminants extérieurs pour le passage.

11. Dispositif de palier pour arbre rotatif, comportant un joint d'étanchéité ou un arrangement de joints d'étanchéité et auquel est associé un dispositif de détection angulaire de la position et/ou du mouvement angulaire de l'arbre rotatif, dispositif de palier **caractérisé en ce que** le dispositif de détection (1) angulaire est un dispositif selon l'une quelconque des revendications 1 à 9.

## Patentansprüche

1. Vorrichtung zur Winkelerfassung, einerseits umfassend einen beweglichen ersten Körper (2), der im Wesentlichen ringförmig ausgebildet ist, fest auf einem beispielsweise als Welle, Achse oder dergleichen ausgebildeten, in axialer Richtung drehbaren Teil (3) gelagert ist und Zähne und/oder ähnliche erfassbare Elemente (4) aufweist, die in einer geordneten Anordnung auf dem Umfang des ringförmigen Körpers (2) angeordnet sind, und andererseits umfassend einen festen zweiten Körper (5), der eine kreisförmige Öffnungsstruktur (5') um den und/oder gegenüber dem ringförmigen beweglichen ersten Körper (2) definiert, wobei der erste Körper (2) und der zweite Körper (5) zwischen sich eine als umlaufender Spalt oder Zwischenraum (6) ausgebildete Durchführung begrenzen, die gegebenenfalls eine labyrinthartige oder mit Schikanen versehene Gestalt aufweist, wobei der bewegliche erste Körper (2) ein oder mehrere vertiefte und/oder vorspringende Gebilde (7) zur Erzeugung einer Luftströmung (FA) aufweist,
wobei die Vorrichtung (1) **dadurch gekennzeichnet ist,**
**dass** der zweite Körper (5) vorteilhafterweise einen oder mehrere Sensoren (5") zur individuellen Erfassung der Zähne und/oder der ähnlichen Elemente (4) des beweglichen ersten Körpers (2) bei deren Positionierung oder deren Vorbeitritt an einer bestimmten Stelle und zur Erzeugung eines entsprechenden Informationssignals aufweist, und
**dass** der feste zweite Körper (5) an einer sich axial erstreckenden kreisförmigen Wand (8), welche den ringförmigen beweglichen ersten Körper (2) umgibt, ein oder mehrere hervorstehende oder vertiefte, schrägverzahnt ausgebildete Gebilde (7') aufweist, die entweder eine einzelne sich über den gesamten Innenumfang der kreisförmigen Wand (8) erstreckende Windung (9) oder eine Vielzahl von aufeinanderfolgenden Windungsabschnitten (9') umfasst, die über den Innenumfang der Wand (8) verteilt sind, wobei das bzw. die Gebilde (7, 7') des beweglichen ersten Körpers (2) und des festen zweiten Körpers (5) während der Drehung des drehbaren Teils (3) eine Luftströmung (FA) erzeugend miteinander zusammenwirken, so dass an der Durchführung oder dem Zwischenraum (6) eine umlaufende dynamische Dichtung ausgebildet ist.

2. Vorrichtung nach Anspruch 1, **dadurch gekennzeichnet, dass** der feste zweite Körper (5) eine Leiteinrichtung, einen Konzentrator und/oder einen Verstärker für die durch die Drehung des ringförmigen beweglichen ersten Körpers (2) erzeugte Luftströmung bildet, wobei der erste Körper (2) mit Luftantriebsflächen bildenden Gebilden (7), wie zum Beispiel Flügeln, Lamellen, Schaufeln oder dergleichen, versehen ist.

3. Vorrichtung nach Anspruch 1 oder 2, **dadurch gekennzeichnet, dass** der feste zweite Körper (5) gegenüber dem ringförmigen beweglichen ersten Köper (2) zumindest teilweise mindestens eine sich in axialer Richtung erstreckende erste Wand (8), die den ringförmigen beweglichen ersten Körper (2) umgibt, und mindestens eine sich von der umgebenden äußeren ersten Wand (8) in radialer Richtung nach innen erstreckende zweite Wand (8') aufweist.

4. Vorrichtung nach einem der Ansprüche 1 bis 3, **dadurch gekennzeichnet, dass** der feste zweite Körper (5) mindestens eine zur Zusammenwirkung mit dem ringförmigen beweglichen ersten Körper (2) ausgebildete Dichtung (10) zur Abdichtung der als umlaufender Spalt oder Zwischenraum (6) zwischen den beiden Körpern (2, 5) ausgebildeten Durchführung umfasst.

5. Vorrichtung nach den Ansprüchen 3 und 4, **dadurch gekennzeichnet, dass** die Dichtung (10) auf der Innenkontur der als ringförmige Schreibe ausgebildeten, sich radial erstreckenden zweiten Wand (8'), gegebenenfalls an dem freien Rand eines die zweite Wand (8') verlängernden axialen Schenkels (8") gelagert ist.

6. Vorrichtung nach einem der Ansprüche 1 bis 5, **dadurch gekennzeichnet, dass** der feste zweite Körper (5), der die mit dem ringförmigen beweglichen ersten Köper (2) zusammenwirkende kreisförmige Öffnung (5') aufweist, eine umlaufende ringförmige Nut (11) zur Leitung der durch die Drehung des ringförmigen beweglichen ersten Körpers (2) erzeugten Luftströmung (FA) definiert.

7. Vorrichtung nach einem der Ansprüche 1 bis 6, **dadurch gekennzeichnet, dass** die auf dem ringförmigen beweglichen ersten Körper (2) vorliegenden Gebilde (7) aus Zähnen (4) bestehen, die aerodynamisch angepasst sind, um bei der Drehung des ersten Körpers (2) und durch Zusammenwirkung mit auf dem festen zweiten Körper (5) vorliegenden Gebilden (7') die eine dynamische Dichtung bildende kontrollierte Luftströmung (FA) zu erzeugen.

8. Vorrichtung nach einem der Ansprüche 1 bis 6, **dadurch gekennzeichnet, dass** der ringförmige bewegliche erste Körper (2) aus Blech mit mindestens einer sich radial erstreckenden, vorteilhafterweise als ringförmige Scheibe (8') ausgebildeten Wand und mindestens einer sich axial erstreckenden Wand (8) ausgebildet ist, wobei die auf dem Umfang verteilten Gebilde (7) zur Erzeugung einer Luftströmung aus Flügeln, Schaufeln oder Lamellen bestehen, die auf mindestens eine der Wände (8, 8') aufgesetzt oder durch Spalten in mindestens einer der Wände (8, 8') ausgebildet sind, derart, dass sie nicht mit den Zähnen oder den ähnlichen erfassbaren Elementen (4) interferieren.

9. Vorrichtung nach einem der Ansprüche 1 bis 6, **dadurch gekennzeichnet, dass** der ringförmige bewegliche erste Körper (2) ein Gestell mit mindestens einer sich radial erstreckenden, vorzugsweise als ringförmige Scheibe ausgebildeten Wand (8') aufweist, auf der die zur Erzeugung einer Luftströmung ausgebildeten Gebilde (7), die auf dem Umfang verteilt sind und aus Flügeln, Schaufeln oder Lamellen bestehen, von hervorstehenden Strukturen gebildet sind, die durch Umspritzung eines synthetischen Materials, gegebenenfalls gleichzeitig mit den Zähnen oder den ähnlichen erfassbaren Elementen (4), ausgebildet sind.

10. Dichtes Gehäuse, dessen Wand von einer drehenden Welle durchgriffen ist, wobei eine Dichtung oder eine Anordnung von Dichtungen an der Durchführung in der Wand gelagert ist,
**dadurch gekennzeichnet, dass** eine Vorrichtung (1) nach einem der Ansprüche 1 bis 9 nahe der äußeren Öffnung der Durchführung derart angebracht ist, dass sie neben der Funktion der Erfassung der Winkelstellung der Welle (3) außerdem eine dynamische Schutzfunktion gegen Verunreinigungen von außen für die Durchführung vorsieht.

11. Lagervorrichtung für eine drehende Welle, die eine Dichtung oder eine Anordnung von Dichtungen aufweist und der eine Vorrichtung zur Winkelerfassung der Position und/oder der Winkelbewegung der drehenden Welle zugeordnet ist, wobei die Lagervorrichtung **dadurch gekennzeichnet ist, dass** die Vorrichtung (1) zur Winkelerfassung eine Vorrichtung nach einem der Ansprüche 1 bis 9 ist.

## Claims

1. Angle detection device comprising, on the one hand, a mobile first body (2) of annular overall shape, mounted rigidly on a rotary component (3), for example of the shaft, spindle or similar type, with an axial direction, and comprising teeth and/or similar detectable elements (4) distributed in an ordered arrangement on the circumference of the said annular body (2) and, on the other hand, a fixed second body (5) defining a structure with a circular opening (5') around and/or facing the mobile annular first body (2), the said first and second bodies (2 and 5) between them delimiting a passage in the form of a circumferential slot or gap (6), possibly with a labyrinth or chicane arrangement, the mobile first body (2) comprising one or more recessed and/or projecting shape(s) (7) able and intended to generate an air flow (FA),
the device (1) being **characterized**
**in that** the second body (5) advantageously bears one or more sensor (s) (5") able individually to detect the teeth and/or the similar elements (4) of the mobile first body (2) as they position themselves in or file past a determined point and of generating a corresponding informative signal, and
**in that** the fixed second body (5) has, in the region of an axially extending circular wall (8) surrounding the annular mobile first body (2), one or more raised or recessed shape(s) (7') of helicoidal configuration comprising either a single turn (9) extending over the entire interior periphery of the said circular wall (8) or a plurality of successive turn portions (9') distributed over the interior periphery of the said wall (8), the shape or shapes (7, 7') of the mobile first body (2) and of the fixed second body (5) respectively collaborating with one another during the rotation of the rotary component (3) so as to generate an air flow (FA) creating a circumferential dynamic seal at the passage or gap (6).

2. Device according to Claim 1, **characterized in that** the fixed second body (5) forms a directional deflector, concentrator and/or amplifier for the air flow generated by the rotation of the annular mobile first body (2) provided with shapes (7) providing air entrainment surfaces, such as blades, fins, vanes or the like.

3. Device according to Claim 1 or 2, **characterized in that** the fixed second body (5) comprises at least an axially extending first wall (8) surrounding the annular mobile first body (2) and at least a second wall (8') extending radially inwards from the exterior surrounding first wall (8), this being at least partially facing the said annular mobile first body (2).

4. Device according to any one of Claims 1 to 3, **characterized in that** the fixed second body (5) comprises at least one seal (10) intended to collaborate with the annular mobile first body (2) to seal the circumferential slot or gap-like passage (6) between the two bodies (2 and 5).

5. Device according to Claims 3 and 4, **characterized in that** the seal (10) is mounted on the interior contour of the radially extending second wall (8') in the form of an annular plate, possibly at the level of the free edge of an axial flange (8") extending the said second wall (8').

6. Device according to any one of Claims 1 to 5, **characterized in that** the fixed second body (5), with circular opening (5') collaborating with the annular mobile first body (2), defines a circumferential annular groove (11) able to channel the air flow (FA) generated by the rotation of the said annular mobile first body (2).

7. Device according to any one of Claims 1 to 6, **characterized in that** the shapes (7) present on the annular mobile first body (2) consist of teeth (4) shaped aerodynamically to generate, as the said first body (2) rotates and through collaboration with the shapes (7') present on the fixed second body (5), the controlled air flow (FA) that forms a dynamic seal.

8. Device according to any one of Claims 1 to 6, **characterized in that** the mobile annular first body (2) is made of sheet metal with at least one radially extending wall, advantageously in the form of an annular plate (8') and at least one axially extending wall (8), the shapes (7) able to generate an air flow, distributed on its circumference, consisting of blades, vanes or fins attached to or formed by indentations into at least one of the said walls (8, 8') in such a way as not to interfere with the teeth or similar detectable elements (4).

9. Device according to any one of Claims 1 to 6, **characterized in that** the mobile annular first body (2) comprises a framework with at least one radially extending wall (8'), advantageously in the form of an annular plate, on which the shapes (7) able to generate an air flow, distributed on its circumference and consisting of blades, vanes or fins, are made up of structures in relief obtained by overmoulding a synthetic material, possibly at the same time as the teeth or similar detectable elements (4).

10. Sealed casing the wall of which has a rotary shaft passing through it, a seal or an arrangement or seals being mounted at the passage through the wall,
which casing is **characterized in that** a device (1) according to any one of Claims 1 to 9 is installed near the exterior opening of the said passage so as to provide, in addition to the function of detecting the angular position of the shaft (3), also a function of protecting the passage dynamically against external contaminants.

11. Bearing device for a rotary shaft, comprising a seal or an arrangement of seals and with which a device for detecting the angular position and/or angular movement of the rotary shaft is associated, which bearing device is **characterized in that** the angular detection device (1) is a device according to any one of Claims 1 to 9.
